# EUROPÄISCHE PATENTANMELDUNG

(11) **EP 2 026 147 A1**
(43) Veröffentlichungstag der Anmeldung: **18.02.2009**
(21) Anmeldenummer: 07015896.9
(22) Anmeldetag: 13.08.2007
(51) Int. Cl.: G05B 19/042, G05B 19/05, H04L 12/56

(54) **Verfahren zum Übermitteln von Telegrammen zwischen einer Steuereinrichtung und einem Peripherieelement über ein Zwischengerät**

(71) Anmelder: SIEMENS AKTIENGESELLSCHAFT, 80333 München (DE)
(72) Erfinder: Extra, Johannes, 91052 Erlangen (DE); Jartyn, Hermann, 91338 Igensdorf (DE)

(57) **Zusammenfassung**

Zur Übermittlung eines Telegramms (T) von der Steuereinrichtung (3) zum Peripherieelement (5,6) nimmt ein Zwischengerät (4) das Telegramm (T) von der Steuereinrichtung (3) entgegen nimmt und leitet es unverändert an das Peripherieelement (5, 6) weiter. Zur Übermittlung eines Telegramms (T) vom Peripherieelement (5,6) zur Steuereinrichtung (3) nimmt das Zwischengerät (4) das jeweilige Telegramm (T) vom Peripherieelement (5,6) entgegen und leitet es unverändert an die Steuereinrichtung (3) weiter. Die Telegramme (T) sind Sicherheitstelegramme, so dass an die Steuereinrichtung (3) bzw. an das Peripherieelement (5,6) weitergeleitete Telegramme (T) von der jeweils empfangenden Einheit (3,5,6) auf Fehlerfreiheit überprüfbar sind.

## Beschreibung

Die vorliegende Erfindung betrifft ein Verfahren zum Übermitteln von Telegrammen zwischen einer Steuereinrichtung und einem Peripherieelement.

In der Automatisierungstechnik ist eine sichere Ansteuerung von Maschinen und Anlagen unerlässlich. Insbesondere müssen sicherheitsgerichtete Informationen sicher zwischen der Steuereinrichtung und dem Peripherieelement übertragen werden. Weiterhin muss eine sichere Verarbeitung gewährleistet sein. Der Begriff "sichere Verarbeitung" bedeutet hierbei, dass ein einzelner Fehler keine gefährlichen Auswirkungen haben darf. Der Begriff "sichere Übertragung" bedeutet, dass Übertragungsfehler mit hinreichender Sicherheit ausgeschlossen werden können. Ein Beispiel einer sicheren Verarbeitung sind zwei Steuereinrichtungen, die sich gegenseitig überwachen und einen sicheren Zustand einer gesteuerten Anlage herbeiführen, sobald eine der beiden Steuereinrichtungen einen fehlerhaften Zustand erkennt. Ein weiteres Beispiel einer sicheren Verarbeitung sind eine für sich betrachtet unsichere Steuereinrichtung und ein für sich betrachtet unsicheres Peripherieelement, die sich jeweils gegenseitig überwachen und in Falle der Erkennung eines Fehlers eine geeignete Sicherheitsreaktion hervorrufen.

Eine sichere Übertragung erfordert zum einen, dass Fehler in den Telegrammen von der jeweils empfangenden Einheit erkannt werden können. Es erfordert weiterhin, dass über Telegrammfehler als solche hinaus auch die Abfolge und das Ausbleiben von Telegrammen sicher erkannt werden können.

Im Stand der Technik ist bekannt, Daten zwischen der Steuereinrichtung und dem Peripherieelement über separate Leitungen zu übertragen. Weiterhin ist bekannt, die Telegramme über einen Bus von der Steuereinrichtung zum Peripherieelement bzw. umgekehrt zu übertragen. In diesem Fall sind im Stand der Technik zum einen die Steuereinrichtung und das Peripherieelement an den Bus angeschlossen. Zum anderen sind die Telegramme Sicherheitstelegramme, so dass an die Steuereinrichtung übermittelte Telegramme von der Steuereinrichtung auf Fehlerfreiheit überprüfbar sind und an das Peripherieelement übermittelte Telegramme vom Peripherieelement auf Fehlerfreiheit überprüfbar sind.

Automatisierungsaufgaben werden oftmals durch hierarchisch aufgebaute Automatisierungssysteme realisiert. Wenn in einem derartigen Fall zwischen der Steuereinrichtung und den Peripherieelement weitere Komponenten (= Zwischengerät im Sinne der vorliegenden Erfindung) angeordnet sind, erfolgt in aller Regel eine Übermittlung der sicherheitsrelevanten Informationen über eigene Leitungen, über welche das jeweilige Peripherieelement mit der Steuereinrichtung verbunden ist.

Die Aufgabe der vorliegenden Erfindung besteht darin, Möglichkeiten zu schaffen, mittels derer sicherheitsgerichtete Telegramme über das Zwischengerät übertragen werden können.

Die Aufgabe wird durch ein Verfahren mit den Merkmalen des Anspruchs 1 gelöst. Die Aufgabe wird weiterhin durch ein Programm mit den Merkmalen des Anspruchs 9 gelöst. Ferner wird die Aufgabe durch einen Datenträger gelöst, auf dem ein derartiges Programm gespeichert ist. Schließlich wird die Aufgabe durch ein Zwischengerät mit den Merkmalen des Anspruchs 11 gelöst.

Erfindungsgemäß nimmt bei einem Verfahren zum Übermitteln von Telegrammen zwischen einer Steuereinrichtung und einem Peripherieelement zur Übermittlung eines der Telegramme von der Steuereinrichtung zum Peripherieelement ein Zwischengerät das jeweilige Telegramm von der Steuereinrichtung entgegen und leitet es unverändert an das Peripherieelement weiter. Eine analoge Vorgehensweise gilt für die Übermittlung eines der Telegramme vom Peripherieelement zur Steuereinrichtung. Auch hier nimmt das Zwischengerät das jeweilige Telegramm entgegen und leitet es unverändert weiter. Die Telegramme sind Sicherheitstelegramme, so dass die Telegramme von der jeweils empfangenden Einheit (Steuereinrichtung oder Peripherieelement) auf Fehlerfreiheit überprüfbar sind. Die Überprüfung auf Fehlerfreiheit umfasst hierbei zum einen die interne Fehlerfreiheit der jeweiligen Telegramme als auch die korrekte Abfolge und das Ausbleiben von Telegrammen.

Vorzugsweise nimmt das Zwischengerät das jeweilige Telegramm über einen logischen Eingangskanal entgegen, ermittelt einen mit dem logischen Eingangskanal korrespondierenden logischen Ausgangskanal und leitet das jeweilige Telegramm über den logischen Ausgangskanal weiter. Diese Vorgehensweise hat den Vorteil, dass die Kommunikationsvermittlung durch das Zwischengerät besonders einfach realisierbar ist.

Vorzugsweise ermittelt das Zwischengerät den logischen Ausgangskanal anhand einer internen Projektierung. Diese Vorgehensweise ist besonders flexibel.

Die zwischen der Steuereinrichtung und dem Peripherieelement ausgetauschten Telegramme sind in der Regel auf jeweils eine Sicherheitsfunktion bezogen. Vorzugsweise sind jeder Sicherheitsfunktion pro Übertragungsrichtung individuell jeweils ein logischer Eingangskanal und ein korrespondierender logischer Ausgangskanal zugeordnet. Durch diese Vorgehensweise sind die einzelnen Sicherheitsfunktionen getrennt voneinander handhabbar.

Es ist möglich, dass das Zwischengerät entgegen genommene Telegramme sofort ohne weitergehende Zwischenspeicherung weiterleitet. Vorzugsweise jedoch kann das Zwischengerät entgegen genommene Telegramme in einem Pufferspeicher zwischenspeichern. In diesem Fall leitet das Zwischengerät die Telegramme spätestens nach einer maximalen Pufferzeit weiter.

Durch diese Ausgestaltung ist das Zwischengerät flexibler gestaltbar. Insbesondere kann das Zwischengerät in diesem Fall weitere Aufgaben übernehmen, insbesondere sogar zeitkritische Aufgaben.

Das Zwischengerät führt das Entgegennehmen und Weiterleiten von Telegrammen im Rahmen einer Vermittlungsfunktionalität durch. Vorzugsweise weist das Zwischengerät zusätzlich zur Vermittlungsfunktionalität eine Eigenfunktionalität auf. Das Zwischengerät ist in diesem Fall vorzugsweise derart ausgebildet, dass ein schreibender Zugriff auf den Pufferspeicher (in dem die entgegen genommenen Telegramme zwischengespeichert sind) im Rahmen der Eigenfunktionalität gesperrt ist. Dies gilt sogar dann, wenn im Rahmen der Eigenfunktionalität versucht wird, Telegramme zu verändern. Diese Vorgehensweise hat den Vorteil, dass ein Verfälschen von Telegrammen nicht möglich ist.

Ein Lesezugriff auf den Pufferspeicher ist - im Gegensatz zu einem schreibenden Zugriff - unkritisch. Das Zwischengerät kann daher derart ausgebildet sein, dass ein lesender Zugriff auf den Pufferspeicher im Rahmen der Eigenfunktionalität möglich ist. Dadurch können insbesondere sicherheitsrelevante Informationen, die zwischen der Steuereinrichtung und dem Peripheriegerät ausgetauscht werden, im Rahmen der Eigenfunktionalität berücksichtigt werden.

Die Zulässigkeit des Zugriffs auf den Pufferspeicher im Rahmen der Eigenfunktionalität ist vorzugsweise durch eine interne, unabhängig von der Eigenfunktionalität des Zwischengeräts festlegbare Projektierung des Zwischengeräts bestimmt. Durch diese Vorgehensweise kann auf einfache Weise gewährleistet werden, dass der Pufferspeicher für schreibende Zugriffe gesperrt ist und für lesende Zugriffe - gegebenenfalls nur teilweise - freigegeben wird.

Es ist möglich, dass das Zwischengerät einen Programmspeicher aufweist, in dem ein Programm gespeichert ist, wobei das Programm von einer entsprechenden Einrichtung des Zwischengeräts ausführbar ist und die Ausführung des Programms den erfindungsgemäßen Betrieb des Zwischengeräts bewirkt. Alternativ kann das Zwischengerät zu diesem Zweck einen ASIC aufweisen.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch den Aufbau eines Automatisierungs-systems,
- FIG 2: schematisch den Aufbau von Telegrammen,
- FIG 3: eine Kommunikationsstruktur zwischen einer Steuereinrichtung und einem Peripherieelement,
- FIG 4: schematisch den Aufbau eines Zwischengeräts,
- FIG 5 und 6: Ablaufdiagramme,
- FIG 7: den Aufbau einer Projektierung und
- FIG 8: ein Ablaufdiagramm.

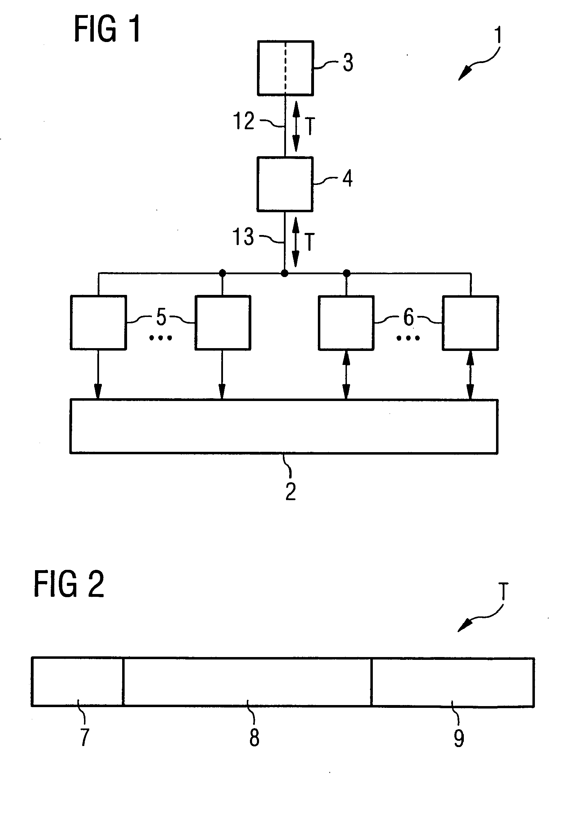

Gemäß FIG 1 soll mittels eines Automatisierungssystems 1 ein technischer Prozess 2 gesteuert werden. Das Automatisierungssystem 1 ist zu diesem Zweck hierarchisch aufgebaut. Es besteht aus (mindestens) einer übergeordneten Steuereinrichtung 3, (mindestens) einem zwischengeordneten Zwischengerät 4 und untergeordneten Peripherieelementen 5, 6. Bei den Peripherieelementen 5, 6 kann es sich beispielsweise um Antriebe 5 und um Ein- und/oder Ausgabeelemente 6 handeln.

Die übergeordnete Steuereinrichtung 3 kann als sicherheitsgerichtete Steuereinrichtung 3 ausgebildet sein. Dies ist in FIG 1 dadurch angedeutet, dass die Steuereinrichtung 3 durch eine gestrichelte Linie in zwei Teileinrichtungen aufgeteilt ist. Das Zwischengerät 4 steuert in der Regel nicht sicherheitsgerichtete Funktionen der Peripherieelemente 5, 6. Insbesondere kann - eine entsprechende Ausgestaltung des technischen Prozesses 2 vorausgesetzt - das Zwischengerät 4 eine Bewegungssteuerung einer numerisch gesteuerten Maschine oder allgemein eine Bewegungssteuerung oder noch allgemeiner eine Prozesssteuerung realisieren. Das Zwischengerät 4 kann als sicherheitsgerichtetes Zwischengerät 4 ausgebildet sein. In der Regel ist es jedoch nicht als sicherheitsgerichtetes Zwischengerät 4 ausgebildet. Die Peripherieelemente 5, 6 können teilweise als sicherheitsgerichtete Peripherieelemente 5, 6 ausgebildet sein, teilweise als nicht sicherheitsgerichtete Peripherieelemente 5, 6.

Im Rahmen der vorliegenden Erfindung sind nicht sicherheitsgerichtete Funktionen nicht von Bedeutung. Nachfolgend wird daher ausschließlich auf sicherheitsgerichtete Funktionen (= Sicherheitsfunktionen) eingegangen. Jede Sicherheitsfunktion ist einem bestimmten Peripherieelement 5, 6 zugeordnet. Hierbei ist es möglich, dass einem einzelnen Peripherieelement 5, 6 mehr als eine Sicherheitsfunktion zugeordnet ist.

Zum Implementieren von Sicherheitsfunktionen tauschen die Steuereinrichtung 3 und das jeweilige Peripherieelement 5, 6 Telegramme T aus. Jedes Telegramm T ist hierbei auf jeweils eine (1) Sicherheitsfunktion bezogen.

Die Telegramme T sind sicherheitsgerichtet (= Sicherheitstelegramme). Sie bestehen gemäß FIG 2 aus einem Header 7, Nutzdaten 8 und Sicherheitsinformationen 9. Der Header 7 enthält beispielsweise Angaben über die sendende Einheit (Steuereinrichtung 3 oder Peripherieelement 5, 6), die empfangende Einheit (Peripherieelement 5, 6 oder Steuereinrichtung 3) und gegebenenfalls weitere Daten. Die Nutzdaten 8 umfassen beispielsweise eine Angabe über die jeweilige Sicherheitsfunktion als solche, deren Zustand (aktiv oder inaktiv) und gegebenenfalls weitere Parameter. Die Sicherheitsinformationen 9 umfassen beispielsweise eine Zeitangabe, zu der das jeweilige Sicherheitstelegramm T generiert wurde sowie Prüfinformationen wie beispielsweise einen CRC und dergleichen mehr. Die Telegramme T sind durch entsprechende Normen festgelegt. Ein Beispiel einer einschlägigen Norm ist die sogenannte PROFISAFE-Norm.

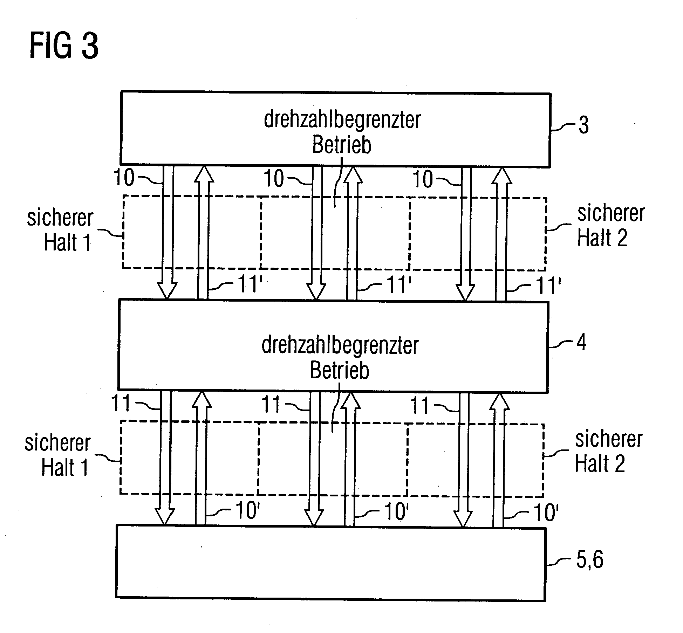

Beispiele sicherheitsgerichteter Funktionen sind gemäß FIG 3 für einen Antrieb 5 beispielsweise der sogenannte sichere Halt 1 (d. h. Drehzahl = Null, danach stromlos schalten) der sichere Halt 2 (d. h. Drehzahl = Null nebst aktivem Halten des Antriebs 5 auf Drehzahl Null) oder der drehzahlbegrenzte Betrieb (d. h. Drehzahl kleiner als eine Grenzdrehzahl, wobei die Grenzdrehzahl parametrierbar sein kann). Die entsprechenden Vorgaben (Aktivierung oder Deaktivierung und gegebenenfalls Parametrierung der jeweiligen Sicherheitsfunktion) erfolgen durch die Steuereinrichtung 3. Der jeweilige Antrieb 5 meldet an die Steuereinrichtung 3 beispielsweise seine Drehzahl und seinen Bestromungszustand zurück.

Gemäß FIG 3 ist für jede Sicherheitsfunktion jeweils ein logischer Eingangskanal 10 in das Zwischengerät 4 sowie ein korrespondierender logischer Ausgangskanal 11 vorhanden, um die entsprechenden, auf die jeweilige Sicherheitsfunktion bezogenen Telegramme T von der Steuereinrichtung 3 zum jeweiligen Peripherieelement 5,6 zu übermitteln. In analoger Weise sind auch für die korrespondierende Übermittlung von Telegrammen T vom jeweiligen Peripherieelement 5, 6 zur Steuereinrichtung 3 entsprechende logische Ein- und Ausgangskanäle 10', 11' vorhanden.

Wie bereits erwähnt, sind die übermittelten Telegramme T Sicherheitstelegramme. Die jeweils entgegennehmende Einheit (je nach Übertragungsrichtung die Steuereinrichtung 3 oder das jeweilige Peripherieelement 5, 6) ist daher in der Lage, das empfangene Telegramm T auf Fehlerfreiheit zu überprüfen. Die Überprüfung umfasst hierbei zum einen die innere Fehlerfreiheit des jeweiligen Telegramms T als solche, zum anderen die Aktualität bzw. Nichtaktualität, die Abfolge und das Ausbleiben des jeweiligen Telegramms T. Wenn die jeweilige Einheit 3, 5, 6 einen Fehler aufdeckt (egal, welchen), löst sie eine sicherheitsgerichtete Reaktion aus. Ein Antrieb 5 kann beispielsweise selbsttätig den sicheren Halt 1 herbeiführen. Die Steuereinrichtung 3 kann beispielsweise Schütze ansteuern, mittels derer die Stromversorgung der Antriebe 5 und der übrigen Peripherieelemente 6 unterbrochen wird.

Erfindungsgemäß erfolgt die Kommunikation zwischen der Steuereinrichtung 3 und den Peripherieelementen 5, 6 nicht direkt, sondern über das Zwischengerät 4. Das Zwischengerät 4 nimmt daher von der jeweils sendenden Einheit (Steuereinrichtung 3 bzw. Peripherieelement 5, 6) das jeweilige Telegramm T entgegen. Es leitet das jeweilige Telegramm T unverändert an die Empfängereinheit (Peripherieelement 5, 6 bzw. Steuereinrichtung 3) weiter. Das Weiterleiten erfolgt hierbei unverändert. Das Telegramm T bleibt somit in seiner ursprünglichen Form erhalten.

Die Kommunikation zwischen der Steuereinrichtung 3 und dem Zwischengerät 4 einerseits sowie zwischen dem Zwischengerät 4 und dem Peripherieelementen 5, 6 andererseits kann beispielsweise über Busse 12, 13 erfolgen. Die Busse 12, 13 können hierbei entsprechend der Darstellung von FIG 1 voneinander verschiedene Busse 12, 13 sein. Alternativ kann es sich jedoch um denselben physikalischen Bus handeln. Entscheidend ist die logische Anordnung des Zwischengeräts 4 zwischen der Steuereinrichtung 3 und dem Peripherieelementen 5, 6.

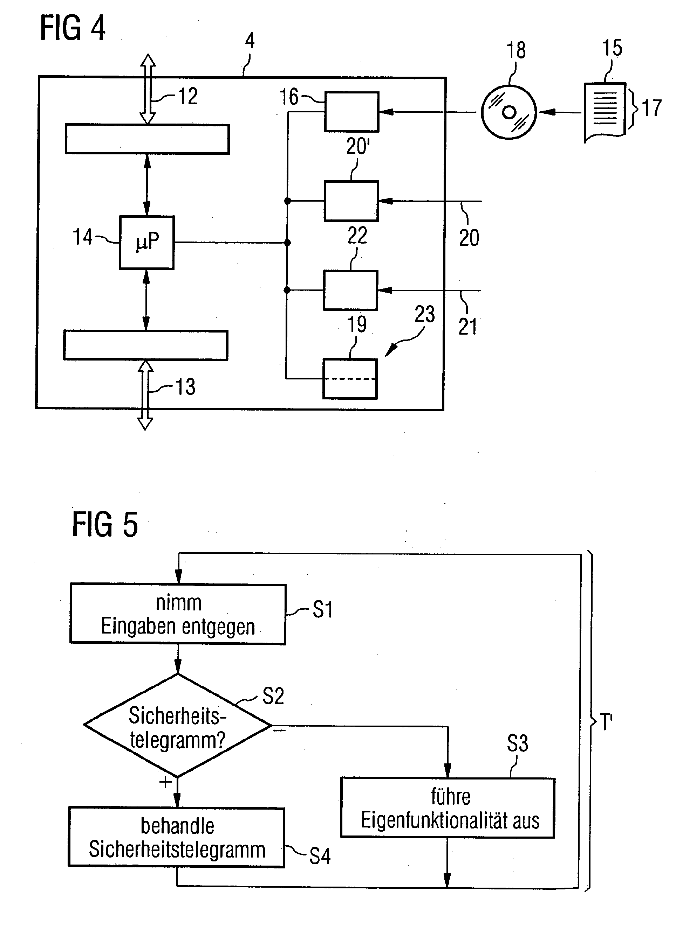

Das Zwischengerät 4 ist gemäß FIG 4 in der Regel als von einem Mikroprozessor 14 (oder einer anderen geeigneten Einrichtung) gesteuertes Zwischengerät 4 ausgebildet. Es weist daher einen Mikroprozessor 14 auf, der im Betrieb ein Programm 15 ausführt. Das Programm 15 ist hierbei in einen Programmspeicher 16 des Zwischengeräts 4 gespeichert.

Das Programm 15 umfasst Maschinencode 17, der vom Mikroprozessor 14 des Zwischengeräts 4 ausführbar ist. Die Abarbeitung des Maschinencodes 17 durch den Mikroprozessor 14 des Zwischengeräts 4 bewirkt, dass das Zwischengerät 4 ein Verfahren ausführt, das nachfolgend näher beschrieben wird.

Das Programm 15 kann dem Zwischengerät 4 beispielsweise über das Internet oder ein anderes Rechnernetz zugeführt werden. Alternativ ist es möglich, das Programm 15 dem Zwischengerät 4 mittels eines geeigneten Datenträgers 18 zuzuführen, auf dem das Programm 15 in maschinenlesbarer Form gespeichert ist. Beispiele geeigneter Datenträger 18 sind eine CD-ROM, ein USB-Memorystick, eine Speicherkarte usw.

Das Zwischengerät 4 nimmt gemäß FIG 5 in einem Schritt S1 Eingaben entgegen. Bei den entgegen genommenen Eingaben kann es sich alternativ um ein Sicherheitstelegramm T oder um andere Eingaben handeln.

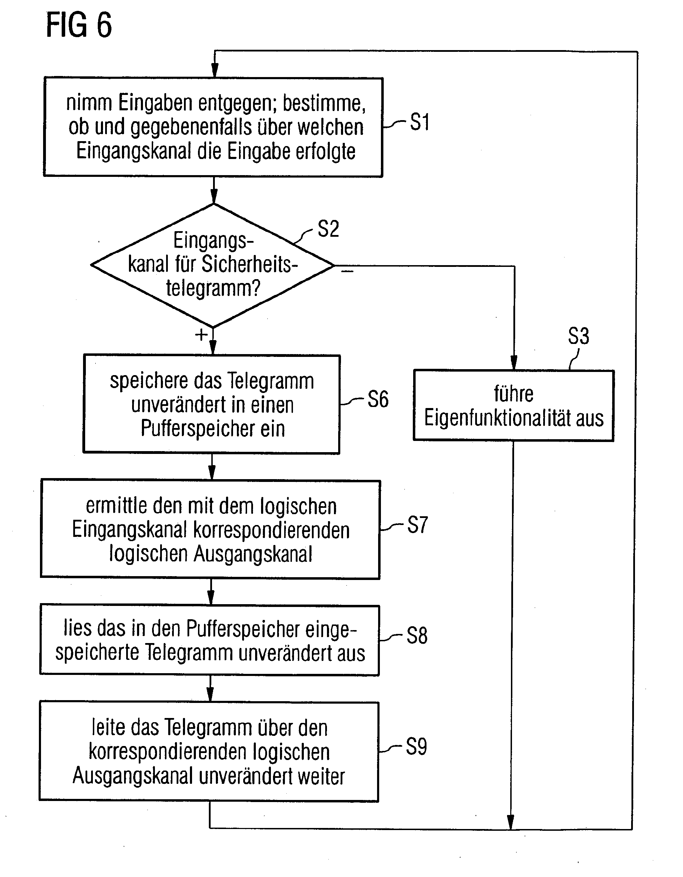

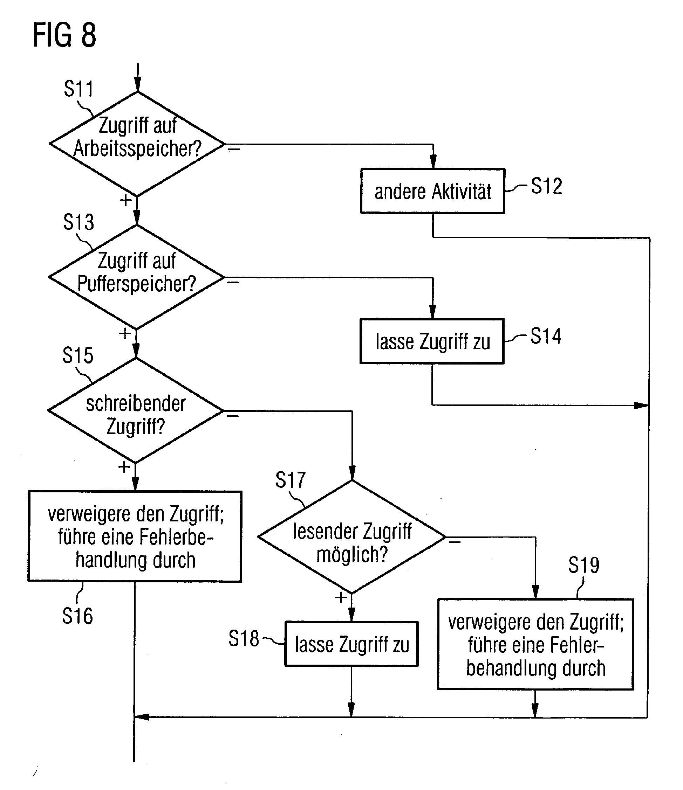

In einem Schritt S2 prüft das Zwischengerät 4, ob die Eingabe des Schrittes S1 ein Sicherheitstelegramm T ist. Handelt es sich bei der Eingabe nicht um ein Sicherheitstelegramm T, geht das Zwischengerät 4 zu einem Schritt S3 über, in dem es eine Eigenfunktionalität ausführt. Im Falle einer üblichen Ausgestaltung des Zwischengeräts 4 als Steuerung für den technischen Prozess 2 kann das Zwischengerät 4 im Rahmen des Schrittes S3 beispielsweise ein Steuerprogramm für den technischen Prozess 2 abarbeiten. Der Schritt S3 wird später in Verbindung mit FIG 8 noch näher erläutert werden. Wenn die Eingabe des Schrittes S1 hingegen ein Sicherheitstelegramm T ist, führt das Zwischengerät 4 einen Schritt S4 aus. Im Schritt S4 wird das Sicherheitstelegramm T weiterbehandelt. Der Schritt S4 wird nachfolgend in Verbindung mit FIG 6 näher erläutert.

Gemäß FIG 6 nimmt das Zwischengerät 4 im Rahmen des Schrittes S1 die jeweilige Eingabe entgegen. Weiterhin bestimmt es im Rahmen des Schrittes S1, ob und gegebenenfalls über welchen Eingangskanal 10, 10' die Eingabe erfolgte. Im Schritt S2 entscheidet das Zwischengerät 4 beispielsweise anhand der Information, ob die Eingabe über einen der Eingangskanäle 10, 10' erfolgte, ob die betreffende Eingabe des Schrittes S1 ein Sicherheitstelegramm T ist. Der Schritt S4 von FIG 5 ist in FIG 6 durch Schritte S6 bis S9 realisiert.

Im Schritt S6 speichert das Zwischengerät 4 das entgegen genommene Telegramm T in einen Pufferspeicher 19 ein. Das Einspeichern in den Pufferspeicher 19 erfolgt hierbei ohne Verändern des Telegramms T. Das Telegramm T bleibt vielmehr unverändert erhalten.

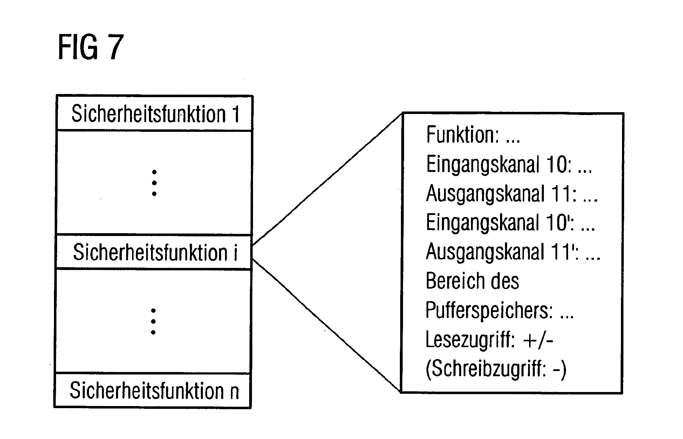

Im Schritt S7 ermittelt das Zwischengerät 4 den mit dem logischen Eingangskanal 10, 10', über den das jeweilige Telegramm T entgegen genommen wurde, korrespondierenden logischen Ausgangskanal 11, 11'. Hierzu kann (vergleiche die FIG 4 und 7) dem Zwischengerät 4 beispielsweise eine Projektierung 20 vorgegeben und in einem Projektierungsspeicher 20' gespeichert sein. Die Projektierung 20 enthält in diesem Fall für jede Sicherheitsfunktion pro Übertragungsrichtung den jeweils zugeordneten Eingangskanal 10, 10', den jeweils zugeordneten Ausgangskanal 11, 11' sowie einen Speicherbereich des Pufferbereichs 19, in dem das jeweilige Telegramm T zwischengespeichert wird. Weiterhin kann für die jeweilige Sicherheitsfunktion festgelegt sein, ob der Inhalt des Speicherbereichs des Pufferspeichers 19 gelesen werden darf oder nicht. Hierauf wird später noch näher eingegangen werden. Falls das Zwischenelement 4 zusätzlich andere Projektierungen aufweist, sind diese anderen Projektierungen vorzugsweise separat gespeichert.

Im Schritt S8 liest das Zwischengerät 4 das in den Pufferspeicher 19 eingespeicherte Telegramm T aus und leitet es im Schritt S9 über den korrespondierenden logischen Ausgangskanal 11, 11' weiter. Sowohl das Auslesen des Telegramms T aus dem Pufferspeicher 19 als auch das Weiterleiten erfolgen hierbei ohne Verändern des Telegramms T.

Die Abarbeitung der Schritte S1, S2 und S4 von FIG 5 erfolgt innerhalb einer Zykluszeit T'. Hierdurch ist gewährleistet, dass das Zwischengerät 4 entgegen genommene Telegramme T spätestens nach einer maximalen Pufferzeit (nämlich der Zykluszeit T') weiterleitet.

Die obenstehend in Verbindung mit FIG 6 erläuterte Vorgehensweise entspricht einer Vermittlungsfunktionalität, welche das Zwischengerät 4 ausführt. Die Eigenfunktionalität des Schrittes S3 ist unabhängig von dieser Vermittlungsfunktionalität. Die Eigenfunktionalität ist hierbei in der Regel durch ein Anwenderprogramm 21 bestimmt, das in einem Anwenderspeicher 22 des Zwischengeräts 4 hinterlegt ist. Das Anwenderprogramm 21 und die interne Projektierung 20 sind dem Zwischengerät 4 unabhängig voneinander vorgebbar. Vorzugsweise ist der Eigenfunktionalität (= Schritt S3 von FIG 5) ein Systemprogramm unterlagert, das nachfolgend in Verbindung mit FIG 8 näher erläutert wird. Das Systemprogramm kann hierbei Bestandteil des Programms 15 sein.

Gemäß FIG 8 prüft das Zwischengerät 4 in einem Schritt S11, ob ein Zugriff auf einen Arbeitsspeicher 23 vorgenommen werden soll. Wenn dies nicht der Fall ist, führt das Zwischengerät 4 in einem Schritt S12 eine andere Aktivität aus, welche keinen derartigen Speicherzugriff umfasst. Der Arbeitsspeicher 23 enthält hierbei unter anderem den Pufferspeicher 19.

Wenn ein Zugriff auf den Arbeitsspeicher 23 vorgenommen werden soll, prüft das Zwischengerät 4 in einem Schritt S13, ob ein Zugriff auf den Pufferspeicher 19 erfolgen soll. Wenn dies nicht der Fall ist, also ein Zugriff auf den Arbeitsspeicher 23, nicht jedoch auf den Pufferspeicher 19 erfolgen soll, lässt das Zwischengerät 4 den Zugriff in einem Schritt S14 zu.

Wenn ein Zugriff auf den Pufferspeicher 19 erfolgen soll, prüft das Zwischengerät 4 in einem Schritt S15, ob der gewünschte Zugriff ein schreibender Zugriff ist. Wenn dies der Fall ist, verweigert das Zwischengerät 4 in einem Schritt S16 den Zugriff und führt eine Fehlerbehandlung durch. Anderenfalls geht das Zwischengerät zu einem Schritt S17 über.

Im Schritt S17 prüft das Zwischengerät 4, ob ein lesender Zugriff auf den Pufferspeicher 19 möglich (= zulässig) ist.

Die Prüfung des Schrittes S17 kann das Zwischengerät 4 beispielsweise anhand der Projektierung 20 (vergleiche FIG 7) vornehmen. Wenn der lesende Zugriff zulässig ist, lässt das Zwischengerät 4 den lesenden Zugriff in einem Schritt S18 zu. Anderenfalls verweigert das Zwischengerät 4 in einem Schritt S19 den lesenden Zugriff und führt eine Fehlerbehandlung durch. Der Schritt S19 korrespondiert im Wesentlichen mit dem Schritt S16.

Obenstehend wurde eine Ausgestaltung des Zwischengeräts 4 erläutert, bei der das Zwischengerät 4 als softwareprogrammierbare Einrichtung ausgebildet ist. Alternativ könnte das Zwischengerät 4 zur Ausführung des erfindungsgemäßen Verfahrens einen ASIC aufweisen.

Die erfindungsgemäße Vorgehensweise weist viele Vorteile auf. Insbesondere müssen zwischen der Steuereinrichtung 3 und den Peripherieelementen 5, 6 keine Leitungen verlegt werden. Die vorliegende Erfindung ist daher einfach realisierbar. Weiterhin ist die erfindungsgemäße Vorgehensweise sehr zuverlässig und auch bei bestehenden Automatisierungssystemen 1 auf einfache Weise nachrüstbar. Weiterhin können die Sicherheitsfunktionen unabhängig vom Anwenderprogramm 21 projektiert werden. Änderungen der Sicherheitsfunktionen und von deren Projektierung 20 bleiben daher ohne Einfluss auf das Anwenderprogramm 21.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Verfahren zum Übermitteln von Telegrammen (T) zwischen einer Steuereinrichtung (3) und einem Peripherieelement (5,6),
- wobei zur Übermittlung eines der Telegramme (T) von der Steuereinrichtung (3) zum Peripherieelement (5,6) ein Zwischengerät (4) das jeweilige Telegramm (T) von der Steuereinrichtung (3) entgegen nimmt und unverändert an das Peripherieelement (5, 6) weiterleitet,
- wobei zur Übermittlung eines der Telegramme (T) vom Peripherieelement (5,6) zur Steuereinrichtung (3) das Zwischengerät (4) das jeweilige Telegramm (T) vom Peripherieelement (5,6) entgegen nimmt und unverändert an die Steuereinrichtung (3) weiterleitet,
- wobei die Telegramme (T) Sicherheitstelegramme sind, so dass an die Steuereinrichtung (3) weitergeleitete Telegramme (T) von der Steuereinrichtung (3) auf Fehlerfreiheit überprüfbar sind und an das Peripherieelement (5,6) weitergeleitete Telegramme (T) vom Peripherieelement (5,6) auf Fehlerfreiheit überprüfbar sind.

2. Verfahren nach Anspruch 1, **dadurch gekennzeichnet, dass** das Zwischengerät (4) das jeweilige Telegramm (T) über einen logischen Eingangskanal (10,10') entgegen nimmt, dass das Zwischengerät (4) einen mit dem logischen Eingangskanal (10,10') korrespondierenden logischen Ausgangskanal (11,11') ermittelt und dass das Zwischengerät (4) das jeweilige Telegramm (T) über den logischen Ausgangskanal (11,11') weiterleitet.

3. Verfahren nach Anspruch 2, **dadurch gekennzeichnet, dass** das Zwischengerät (4) den logischen Ausgangskanal (11,11') anhand einer internen Projektierung (20) ermittelt.

4. Verfahren nach Anspruch 2 oder 3, **dadurch gekennzeichnet, dass** die zwischen der Steuereinrichtung (3) und dem Peripherieelement (5,6) ausgetauschten Telegramme (T) auf jeweils eine Sicherheitsfunktion bezogen sind und dass jeder Sicherheitsfunktion pro Übertragungsrichtung individuell jeweils ein logischer Eingangskanal (10,10') und ein korrespondierender logischer Ausgangskanal (11,11') zugeordnet sind.

5. Verfahren nach einem der obigen Ansprüche, **dadurch gekennzeichnet, dass** das Zwischengerät (4) entgegen genommene Telegramme (T) in einem Pufferspeicher (19) zwischenspeichert und spätestens nach einer maximalen Pufferzeit (T') weiterleitet.

6. Verfahren nach Anspruch 5, **dadurch gekennzeichnet, dass** das Zwischengerät (4) das Entgegennehmen und Weiterleiten von Telegrammen (T) im Rahmen einer Vermittlungsfunktionalität ausführt, dass das Zwischengerät (4) zusätzlich zur Vermittlungsfunktionalität eine Eigenfunktionalität aufweist und dass das Zwischengerät (4) derart ausgebildet ist, dass ein schreibender Zugriff auf den Pufferspeicher (19) im Rahmen der Eigenfunktionalität gesperrt ist.

7. Verfahren nach Anspruch 6, **dadurch gekennzeichnet, dass** das Zwischengerät (4) derart ausgebildet ist, dass ein lesender Zugriff auf den Pufferspeicher (19) im Rahmen der Eigenfunktionalität möglich ist.

8. Verfahren nach Anspruch 6 oder 7, **dadurch gekennzeichnet, dass** die Zulässigkeit des Zugriffs auf den Pufferspeicher (19) im Rahmen der Eigenfunktionalität durch eine interne, unabhängig von der Eigenfunktionalität des Zwischengeräts (4) festlegbare Projektierung (20) des Zwischengeräts (4) bestimmt ist.

9. Programm, das Maschinencode (17) umfasst, dessen Abarbeitung durch ein Zwischengerät (4) bewirkt, dass das Zwischengerät (4) ein Verfahren nach einem der obigen Ansprüche ausführt.

10. Datenträger, auf dem ein Programm (15) nach Anspruch 9 gespeichert ist.

11. Zwischengerät, das derart ausgestaltet ist, dass es im Betrieb ein Verfahren nach einem der Ansprüche 1 bis 8 ausführt.

12. Zwischengerät nach Anspruch 11, **dadurch gekennzeichnet, dass** das Zwischengerät einen Programmspeicher (16) aufweist, in dem ein Programm (15) nach Anspruch 9 gespeichert ist, wobei das Programm (15) von einer entsprechenden Einrichtung (14) des Zwischengeräts ausführbar ist.

13. Zwischengerät nach Anspruch 11, **dadurch gekennzeichnet, dass** das Zwischengerät einen ASIC aufweist, der das Verfahren ausführt.
